# EUROPÄISCHE PATENTANMELDUNG

(11) **EP 1 972 526 A2**
(43) Veröffentlichungstag der Anmeldung: **24.09.2008**
(21) Anmeldenummer: 07460031.3
(22) Anmeldetag: 23.10.2007
(51) Int. Cl.: B62D 13/04

(54) **Hydraulische Lenksteuervorrichtung und die Anordnung dieser für Auflieger**

(30) Priorität: 23.03.2007 PL 38205407
(71) Anmelder: Autoryzowana Stacja Obslugi, 89-100 Naklo n. Not (PL)
(72) Erfinder: Mieczkowski, Piotr, 89-100 Naklo n. Not. (PL)
(74) Vertreter: Wojcieszko, Jerzy

(57) **Zusammenfassung**

Hydraulische Lenksteuervorrichtung für einen Auflieger. Auf einer Lenkscheibe ist die Steuervorrichtung angebracht, die drehbar befestigte hydraulische Stellmotore enthält. An der Lenkscheibe (3) sind drehbar, mittels drehbaren Elementen (4) an den bewegbaren Kolben (4), parallel zwei Paare hydraulischer Stellmotore (6,6¹) angeordnet, wobei die Drehpunkte (7,7¹) der drehbaren Elemente (4) gegenseitig symmetrisch situiert sind, in einem identisch exzentrischen Abstand ("a") in Bezug auf den Mittelpunkt (S) der Lenkscheibe (3) gegenseitig um 80⁰ bis 160⁰ verdreht angeordnet, wobei sowohl die inneren Stellmotoren des ersten Paars (6) wie die des zweiten Paars (6¹) über hydraulische Leitungen (8) mittels hydraulischer Stellmotore (9,9¹), die Radlenker (10...10³) des Anhängerwagens (2) ansteuern. Die Stellmotoren (9,9¹) sind gegenseitig gegenläufig installiert, wobei zur Steuerung der Hinterräder (11) des Anhängers der erste Stellmotor (9) auf den ersten Radlenker (10) und der zweite Stellmotor (9¹) auf den letzten Radlenker (10³) wirkt. Die äußeren hydraulischen Stellmotoren (6,6¹) des ersten und zweiten Paars dagegen sind mittels hydraulischer Leitungen (8¹) mit den hydraulischen Stellmotoren (9²,9³) des Radlenkers (10⁴,10⁵) des Aufliegers (1) verbunden, wobei sie gegenseitig gegenläufig angebracht sind und der erste Stellmotor (9²) auf den ersten Radlenker (10⁴) und der zweite Stellmotor (9³) auf den zweiten Radlenker (10⁵) des Aufliegers (1) wirkt.

## Beschreibung

Gegenstand der Erfindung ist eine hydraulische Steuervorrichtung und die Anordnung der Steuerung, besonders geeignet für Last-Anhängewagen, wie auch für Auflieger, die zum Kuppeln mit Sattelschleppern, mit Hilfe einer bekannten Sattelkupplungsvorrichtung, bestimmt sind, wo der Anhängewagen oder Auflieger mit einer Drehscheibe mit einer hydraulischen Steuervorrichtung ausgestattet und mit einer hydraulischen Steuervorrichtung der Radlenker verbunden ist, womit verursacht wird, dass beim Abbiegen der Zugmaschine die entsprechende Einstellung der Räder des Auflieger oder der Hinterräder des Last-Anhängewagens erreicht wird.

In einer bekannten Lösung der Steuervorrichtung und die Anordnung der Steuerung der Radlenker am Anhängewagen, die in deutscher Patent-Offenlegungsschrift DE 2263506 beschrieben ist, handelt es sich um eine an der Drehscheibe gelenkartig befestigten Steuervorrichtung, die an der Drehscheibe mit einem Hebel von veränderlicher Länge ausgestattet ist, der an seinen Enden, drehbar angeordnete, gegenseitig gleichläufige hydraulische Stellmotore angebracht hat, die im Steuersystem der hinteren Räder, mit den hydraulischen Stellmotoren verbunden, verursachen, dass in Abhängigkeit von der Winkelstellung der Drehscheibe, die Drehung der Hinterräder um einen Winkel erfolgt, der von der Einstellung der veränderlichen Länge des Hebels abhängig ist.

In bekannten Lösungen wird das Steuersystem der Hinterradlenker im Allgemeinen mit der Steuervorrichtung mit Hilfe von hydraulischen Leitungen verwirklicht und besteht aus zwei Stellmotoren, die gleichläufig auf Hebelplatten befestigt sind, die wiederum drehbar mit dem Zapfen des Gestells des Anhängewagens oder Auflieger verbunden sind, die gegenseitig mit Drehgelenken verbundene Hebelsysteme und demzufolge auch die lenkbaren Räder des Anhängewagens oder Auflieger in Bewegung setzen, mit Hilfe von Hebeln, die ebenfalls mit Drehgelenken der Räderlenkstangen verbunden sind.

Die dargestellte Lösung der Steuervorrichtung und des Steuersystems der Radlenker, besonders zur Bildung des Radausschlags des Auflieger oder der Hinterräder des Anhängewagens, sind angesichts der vielen komplizierten Mechanismen kostenbedürftig und gewichtig und darüber hinaus unzuverlässig im Betrieb, weil im Betriebsverlauf die sich an den drehbaren Kugelgelenken der Radlenker und anderer Verbindungen ansammelnden Verunreinigungen einen raschen Verschleiß verursachen und die dabei entstandenen Spiele zu Beschädigungen und demzufolge zu kostspieligen Instandsetzungen führen.

Aufgabe der Erfindung ist die Eliminierung der Fehler mittels einer anderen Steuervorrichtung und Anordnung der Steuerung, die vom technischen Ansichtspunkt eine günstigere Drehung der Lenkscheibe bietet und dabei das komplizierte Hebelsystem, wie ebenfalls die komplizierten Mechanismen des Steuersystems der Radlenker und drehbarer Kugelgelenke, die im Betrieb vielen Verunreinigungen nicht standhalten können, eliminiert.

Die grundsätzliche Aufgabe im Bereich einer Steuervorrichtung und die Anordnung der Steuerung für Radlenker eines bestimmten Gegenstandes wurde in wesentlichen Merkmalen der Erfindung so realisiert, dass an der Lenkscheibe drehbar, mit Hilfe von drehbaren Elementen parallel zwei Paare hydraulischer Stellmotore angeordnet sind, deren Drehpunkt der drehbaren Elemente gegenseitig symmetrisch und in einem identisch exzentrischen Abstand im Bezug auf den Mittelpunkt der Lenkscheibe gegenseitig um 80° bis 160° verstellt ist, wobei sowohl die inneren Stellmotoren des ersten Paars wie des zweiten Paars mit hydraulischen Leitungen mit den hydraulischen Stellmotoren, die die Radlenker des Anhängerwagens ansteuern; dabei sind die Stellmotore gegenseitig gegenläufig installiert, der erste mit dem ersten Radlenker, der zweite mit dem letzten Radlenker und dienen der Steuerung der Hinterräder des Anhängers, die äußeren hydraulischen Stellmotore des ersten und zweiten Paars dagegen sind mittels hydraulischen Leitungen mit den hydraulischen Stellmotoren des Radlenkers des Auflieger verbunden, wobei sie gegenseitig gegenläufig angebracht sind, der erste Stellmotor mit dem ersten Radlenker, der zweite mit der mit dem zweiten Radlenker des Drehschemels. In einer günstigen Ausführungsvariante liegt das wesentliche Merkmal darin, dass beide hydraulische Stellmotorenpaare um 60° gegenüber der horizontalen Achse der Lenkscheibe verstellt sind. Diese Ausführung ermöglicht, zusätzlich das gleichzeitige Ansteuern aller Räder des Auflieger und des Anhängewagens.

Diese Ausführung zeichnet sich auch damit aus, dass im Steuersystem des Radausschlags der hinteren Räder des Anhängewagens und im Radausschlagsteuersystem des Auflieger die Ausschlagvorrichtungen drehbar am Rahmen des Anhängers oder des Auflieger mittels bekannten, typischen Radnaben aufgesetzt sind und die Hebel des Radauschlagmechanismus der Hinterräder des Anhängers oder des Auflieger drehbar mit den Lenkvorrichtungen mittels bekannten, typischen Endstücken der Lenkstangen verbunden sind.

Die Anwendung typischer Radnaben im Lenkvorrichtungssystem und typischer Endstücke der Lenkstangen beeinflusst positiv die Sicherheit und verlängert die Lebensdauer des gesamten Systems, das zusätzlich verunreinigungsbeständig wird.

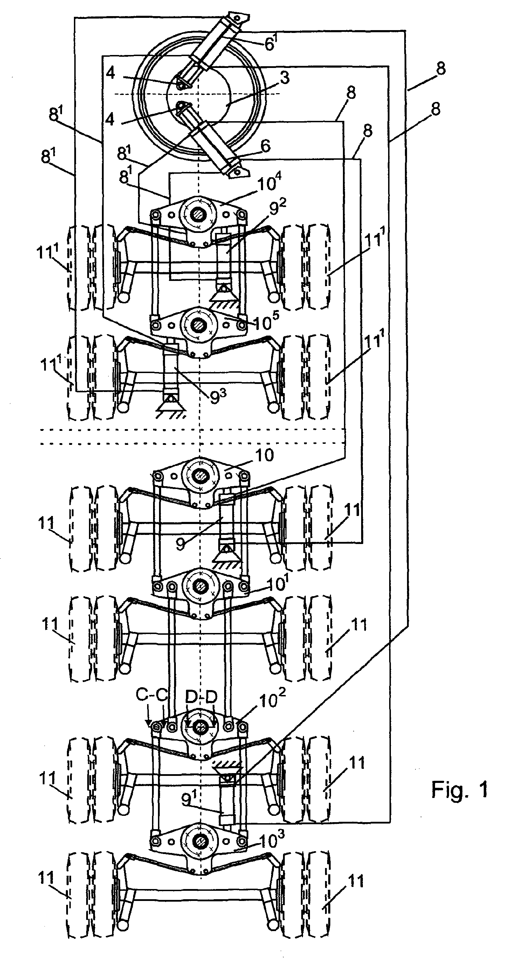

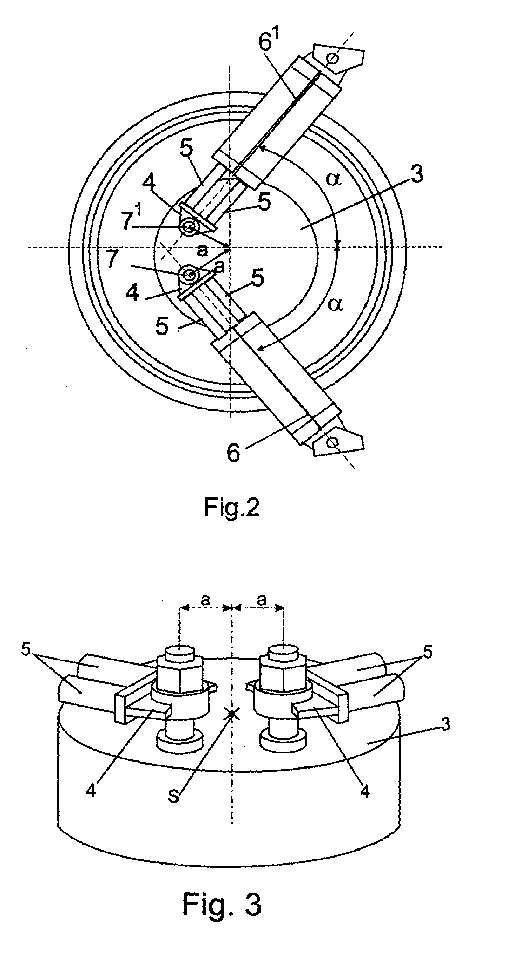

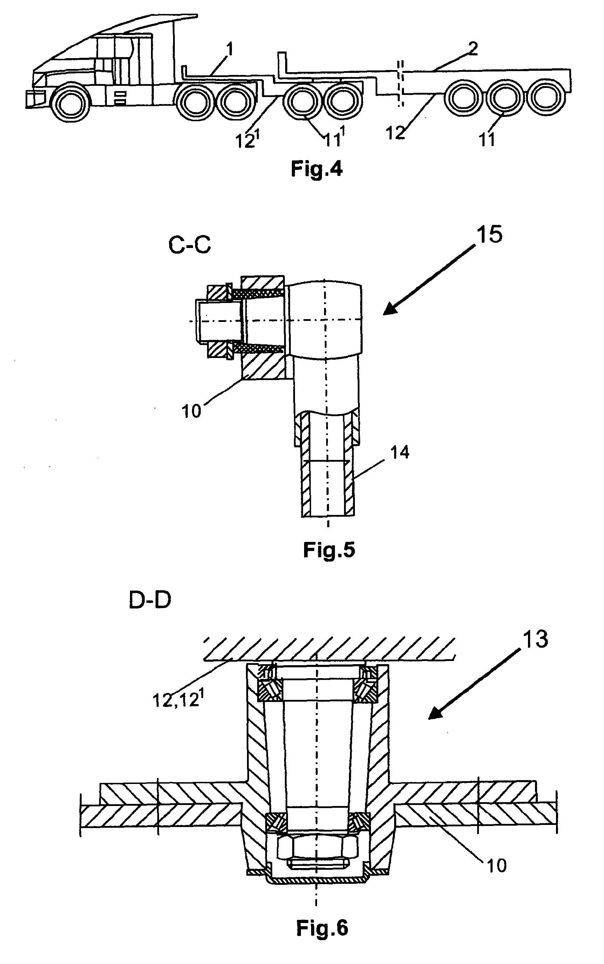

Die grundsätzliche Ausführung des Gegenstands der Erfindung ist zeichnerisch dargestellt, wobei in Fig. 1 hydraulischen Steuervorrichtung und die Anordnung der Steuerung, besonders für Last-Anhängewagen und Auflieger nach wesentlichen Merkmalen der Erfindung schematisch dargestellt ist, die Fig. 2 verdeutlicht schematisch die Verbindung eines Paares der hydraulischen Stellmotore mit der Lenkscheibe in günstigster Aufstellung der hydraulischen Stellmotore, die hier den Winkel α = 60° im Bezug auf die horizontale Achse der Lenkscheibe aufweisen. In Fig. 3 ist die Anbringung der hydraulischen Stellmotore nach Fig. 3 perspektivisch dargestellt, Fig. 4 stellt schematisch die Verbindungen des Sattelschleppers zwischen dem Auflieger und dem Anhängewagen dar, Fig. 5 zeigt den Schnitt C-C von den Zeichnungen Fig. 1 das typische Endstück einer Lenkstange, angewendet im Mechanismus der Lenkvorrichtung und Fig. 6, die den Schnitt D-D von den Zeichnungen Fig. 1 verdeutlicht, eine typische Radnabe, angewendet im Mechanismus des Radlenkers.

In den Zeichnungen Fig.1, 2 und 3 ist ein Beispiel der Ausführungsvariante einer hydraulischen Steuervorrichtung und eines hydraulischen Lenkvorrichtungssteuersystems für einen Auflieger 1 und einen Anhängewagen 2 dargestellt (schematisch - Fig. 4). Diese Beispiel, nach wesentlichen Merkmalen der Erfindung, zeichnet sich damit aus, dass auf der Lenkscheibe 3, drehbar mittels ihrer drehbaren Elementen 4 mit ihren beweglichen Kolben 5, zwei Paare hydraulischer Stellmotore 6 und 6¹, parallel angebracht sind. Die Drehpunkte 7 und 7¹ der Drehbaren Elementen 4 sind gegenseitig symmetrisch in demselben Abstand "a" im Bezug auf den Mittelpunkt S der Lenkscheibe 3 und um denselben Winkel α = 60° bezogen auf die horizontale Achse "x" der Lenkscheibe 3 situiert, wobei die inneren Stellmotore von dem ersten Paar 6 wie auch von dem zweiten Paar 6¹ mittels hydraulischen Leitern 8 mit den hydraulischen Stellmotoren 9, 9¹, die den Radlenker 10 des Radausschlags 11 der Anhängewagen 2 ansteuern, verbunden sind. Diese Stellmotore sind gegenseitig gegenläufig angebracht, der erste 9 mit dem ersten Radlenker 10, der zweite 9¹ mit dem letzten Radlenker 10³. Die äußeren Stellmotore von dem ersten Paar 6 und dem zweiten Paar 6¹ sind mittels hydraulischen Leitern 8¹ mit den hydraulischen Stellmotoren 9² und 9³ verbunden, die den Radlenker 10 des Auflieger 1 ansteuern. Diese Stellmotoren sind gegenseitig gegenläufig angebracht, der erste 9² mit dem ersten Radlenker 10⁴, der zweite 9³ mit dem zweiten Radlenker 10⁵ des Auflieger 1.

Darüber hinaus zeichnet sich diese Ausführung mit wesentlichen Merkmalen aus, was in den Zeichnungen Fig. 5 und Fig. 6 hervorgehoben ist: im Steuersystem des Mechanismus des Hinterradausschlags 11 des Anhängewagens 1 und des Mechanismus des Radausschlags 9¹ des Auflieger 1 sind die Radlenker 10¹ bis 10³, und 10⁴, 10⁵ dieser Mechanismen drehbar auf dem Rahmen 12 des Anhängers 1 oder auf dem Rahmen 12¹ des Auflieger 1 mittels bekannter, typischer Radnaben 13 angebracht. Die Hebel 14 des Radauschlagmechanismus der Hinterräder 11 des Anhängers 2 oder die Hebel 14¹ des Radausschlagmechanismus der Hinterräder 11¹ des Aflieger 1, die drehbar mit den Radlenkern 10 bis 10⁵ verbunden sind, werden mit bekannten, typischen Lenkstangenendstücken 15 zusammengehalten.

## Patentansprüche

1. Hydraulische Steuervorrichtung und die Anordnung der Steuerung, besonders für einen Anhängewagen und einen Auflieger, in welchen auf der Lenkscheibe die Steuervorrichtung angebracht ist und drehbar befestigte hydraulische Stellmotore enthält, die im Steuersystem der Hinterräder mit Hilfe von hydraulischen Leitern mit hydraulischen Stellmotoren verbunden sind und verbunden mittels Hebelsystem mit den hinteren Rädern des Anhängewagens und den hinteren Rädern des Auflieger verursachen, in Abhängigkeit von der Lenkscheibenwinkelstellung, den Radausschlag des Anhängewagens und des Auflieger, **dadurch gekennzeichnet, dass** an der Lenkscheibe (3) drehbar, mittels drehbaren Elementen (4) an den bewegbaren Kolben (4), parallel zwei Paare hydraulischer Stellmotore (6, 6¹) angeordnet sind, wobei die Drehpunkte (7, 7¹) der drehbaren Elemente (4) gegenseitig symmetrisch situiert sind, in einem identisch exzentrischen Abstand ("a") im Bezug auf den Mittelpunkt (S) der Lenkscheibe (3) gegenseitig um 80° bis 160° verstellt ist, wobei sowohl die inneren Stellmotoren des ersten Paars (6) wie des zweiten Paars (6¹) mit hydraulischen Leitungen (8) mit den hydraulischen Stellmotoren (9,9¹), die die Radlenker (10...10³) des Anhängerwagens (2) ansteuern, dabei sind die Stellmotore (9, 9¹) gegenseitig gegenläufig installiert, der erste (9) mit dem ersten Radlenker (10), der zweite (9¹) mit dem letzten Radlenker (10³) und dienen der Steuerung der Hinterräder (11) des Anhängers, die äußeren hydraulischen Stellmotore (6, 6¹) des ersten und zweiten Paars dagegen sind mittels hydraulischen Leitungen (8¹) mit den hydraulischen Stellmotoren (9², 9³) des Radlenkers (10⁴,10⁵) des Auflieger (1) verbunden, wobei sie gegenseitig gegenläufig angebracht sind, der erste Stellmotor (9²) mit dem ersten Radlenker (10⁴), der zweite (9³) mit der mit dem zweiten Radlenker (10⁵) des Aufliegers (1).

2. Hydraulische Steuervorrichtung nach Anspruch 1, **dadurch gekennzeichnet, dass** zwei Paare hydraulischer Stellmotore (6, 6¹) um denselben Winkel α = 60° gegenüber der horizontalen Achse ("x") der Lenkscheibe (3) verstellt sind.

3. Hydraulische Steuervorrichtung nach Anspruch 1 oder 2, **dadurch gekennzeichnet, dass** in dem Anordnung der Steuerung des Radlenkers (10...10³) der Hinterräder (11) des Anhängewagens (2), diese Radlenkers drehbar am Rahmen (12) des Anhängewagens (2) mit Hilfe von typischen Radnaben (13) angebracht sind und die Hebel (14) des Ausschlagmechanismus der Hinterräder (11), die drehbar mit den Radlenkers (10....10³) in Verbindung bleiben, mit diesen mittels typischen Lenkstangenendstücken (15) verbunden sind.

4. Hydraulische Steuervorrichtung nach Anspruch 1 oder 2, **dadurch gekennzeichnet, dass** in dem Anordnung der Steuerung der Radlenker (10⁴, 10⁵) der Hinterräder (11¹) eines Auflieger (1), diese Radlenkers drehbar am Rahmen (12¹) des Aufliegers (1) mit Hilfe von typischen Radnaben (13) angebracht sind und die Hebel (14) des Ausschlagmechanismus der Hinterräder (11¹), die drehbar mit den Radlenkers (10⁴,10⁵) in Verbindung bleiben, mit diesen mittels typischen Lenkstangenendstücken (15) verbunden sind.
